**Europäisches Patentamt**

**European Patent Office**

**Office européen des brevets**

(19)

(11) Veröffentlichungsnummer: **0 057 902**
**A2**

(12) # EUROPÄISCHE PATENTANMELDUNG

(21) Anmeldenummer: **82100754.9**

(22) Anmeldetag: **03.02.82**

(51) Int. Cl.³: **H 05 B 1/02**

(30) Priorität: **11.02.81 DE 3104837**

(43) Veröffentlichungstag der Anmeldung:
**18.08.82 Patentblatt 82/33**

(84) Benannte Vertragsstaaten:
**AT CH FR GB IT LI SE**

(71) Anmelder: **BROWN, BOVERI & CIE Aktiengesellschaft**
**Kallstadter Strasse 1**
**D-6800 Mannheim 31(DE)**

(72) Erfinder: **Thorwest, Joachim, Ing.grad.**
**Burgunder Weg 5**
**D-5880 Lüdenscheid(DE)**

(72) Erfinder: **Zapp, Robert, Ing.grad.**
**Löher Weg 35**
**D-5885 Schalksmühle(DE)**

(74) Vertreter: **Kempe, Wolfgang, Dr. et al,**
**c/o BROWN, BOVERI & CIE AG Kallstadter Strasse 1**
**D-6800 Mannheim-Käfertal(DE)**

(54) **Elektronischer Energiesteller mit Anheizautomatik zur Steuerung der Heizleistung eines elektrischen Heizelementes.**

(57) Elektronischer Energiesteller mit Anheizautomatik zur Steuerung der Heizleistung eines elektrischen Heizelementes (3), bestehend aus einem digitalen integrierten Schaltkreis (1), dessen Tastverhältnis manuell durch ein mit einem Netzschalter (3) gekuppelten Potentiometer (R 3) einstellbar ist und der zu seiner Gleichstromversorgung über ein Netzteil (D2, R4, C1) ständig an Spannung liegt. Von dem Netzschalter (2) wird dem integrierten Schaltkreis (1) über einen Widerstand (R1) der Betriebszustand zugeführt. Für die Synchronisation und Taktung ist der integrierte Schaltkreis (1) mit einem Synchronisationseingang versehen, dem die Netzfrequenz über einen Widerstand (R2) zuführbar ist. Ein Thyristor (T1) ist durch den integrierten Schaltkreis (1) zur Schaltung einer Signallampe in Abhängigkeit von der Einschaltung des Heizelementes (3) und/oder mindestens eines weiteren Heizelementes derart schaltbar, daß diese kurzfristig nach Einschaltung aufleuchtet und langfristig nach Abschaltung erlischt.

EP 0 057 902 A2

Elektronischer Energiesteller mit Anheizautomatik zur Steuerung der Heizleistung eines elektrischen Heizelementes

Die Erfindung betrifft einen elektronischen Energiesteller mit Anheizautomatik zur Steuerung der Heizleistung eines elektrischen Heizelementes, z.B. einer Kocheinrichtung, der aus einer ein Lastschaltglied schaltenden elektronischen Multivibratorschaltung besteht, deren Tastverhältnis manuell durch ein mit einem Netzschalter gekuppelten Potentiometer einstellbar ist.

Eine Einrichtung dieser Art ist z.B. durch einen elektronischen Leistungssteller nach DE-AS 25 49 535 bekannt geworden. Diese besteht aus einer Operations-Verstärker-Schaltung, die mit analogen und linearen Bauelementen aufgebaut ist.

Aufgabe der Erfindung ist es, einen elektronischen Energiesteller derart zu verbessern und auszubilden, daß er auf kleinstem Raum mit einfachen Bauteilen so herstellbar ist, daß durch ihn eine Energieeinsparung bei der Betreibung von Kochstellen erzielbar ist, indem ohne besondere Fühler eine Erfassung von Restwärme einer Kochstelle ermöglicht ist, die durch den Energiesteller automatisch für einen weiteren Kochvorgang ohne Gefahr der Überhitzung der Kochstelle verwertet wird. Gleichzeitig wird dabei eine Anzeige der Restwärme der Kochstelle erzielt, durch die dem Benutzer die Gefahr einer möglichen Verbrennung an noch heißen Kochstellen angezeigt wird.

Erfindungsgemäß wird dies dadurch gelöst, daß die Multivibratorschaltung aus einem digitalen integrierten Schaltkreis besteht, der zu seiner Gleichstromversorgung über ein Netzteil ständig an Spannung liegt, dem der Betriebsstand von dem Netzschalter über einen Widerstand zuführbar ist und der für die Synchronisation und Taktung der Schaltvorgänge mit einem Synchronisationseingang versehen ist, dem die Netzfrequenz über einen Widerstand zuführbar ist und daß ein Thyristor zur Schaltung einer Signallampe derart abhängig von der Einschaltung des Heizelementes und/oder mindestens eines weiteren Heizelementes schaltbar ist, daß die Signallampe kurzfristig nach Einschaltung aufleuchtet und langfristig nach Abschaltung erlischt.

Es wird hierdurch ein elektronischer Energiesteller geschaffen, daß nur einen kleinen Bauraum benötigt und mit dem ohne Verwendung eines besonderen Temperaturfühlers eine Leistungsschaltung mit Anheizperiode und reduzierter Fortkochleistung einer elektrischen Kochstelle zuverlässig in den eingestellten gewünschten Kochbereichen möglich ist. Gleichzeitig erfolgt dabei eine sogenannte Heißanzeige, bei der es möglich ist, aus Sicherheitsgründen und zur Energieeinsparung die Restwärme einer Kochstelle anzuzeigen, ohne daß hierzu weitere Schaltelemente erforderlich werden. Das Heißsignal wird durch den integrierten Schaltkreis in dem jeweiligen Verwendungszweck angepassten Zeiten geschaltet. So kann z.B. in der Verwendung bei Elektroherden das Signal 7 Sek. nach Einschaltung der Kochstelle aufleuchten und 30 Min. nach Abschaltung der Kochstelle abschalten. Nach weiterer Ausgestaltung ist dem Thyristor zur Ansteuerung eine Widerstandskombination zugeschaltet.

Nach weiterer Erfindung ist über einen externen Anschluss ein 220 V-Signal über ein weiteres Netzteil als Niedervolt-Gleichspannung dem integrierten Schaltkreis zur Beeinflussung der Thyristors T1 zuführbar.

Hierdurch besteht die Möglichkeit, daß weitere parallel geschaltete Schaltersysteme ohne besondere Heiß-Anzeigevorrichtungen durch den elektronischen Energiesteller ebenfalls erfaßt werden können.

Nach weiterer Ausgestaltung ist der integrierte Schaltkreis mit einem Eingang über eine Uhr mit Schwachstrom- oder Halbleiterschalter gegen Null-Potential schaltbar.

Hierdurch wird bei Einschaltung des Netzschalters des elektronischen Energiestellers die Leistungssteller-Funktion blockiert, die je nach Einstellung der Schaltuhr für die Ausführung eines Kochvorganges freigegeben werden kann. Zu diesem Zweck kann eine Schaltuhr verwendet werden, die lediglich einen Schwachstrom- oder einen Halbleiterschalter aufweist. Die Schaltung des Laststromes wird vom Lastschaltkreis des elektronischen Energiestellers übernommen. Eine Schaltuhr mit aufwendigem Kontaktsystem ist somit nicht erforderlich.

Eine weitere Ausbildung der Erfindung besteht darin, daß das Potentiometer mit seinem einen Widerstandsende an dem Versorgungsspannungseingang des integrierten Schaltkreises liegt und mit seinem anderen Widerstandsende mit einem anderen Eingang des integrierten Schaltkreises verbunden ist, wodurch bei Störung des Ansteuerkreises dem integrierten Schaltkreis ein Signal zuführbar ist, das den Thyristor in einen laufenden Ein- Auszustand und das das Lastschaltglied steuernde Tastverhältnis in das Minimum versetzt.

Bei Störung des Ansteuerkreises wird hierdurch ein Signal dem integrierten Schaltkreis zugeführt, so daß die Ausgangsleistung der Schaltung heruntergeschaltet wird, z.B. auf ca. 3 %. Gleichzeitig erfolgt hierdurch ein Blinkbetrieb der Signallampe der sogenannten Heißanzeige, wodurch der Störfall erkennbar wird.

Nach weiterer Ausgestaltung ist zwischen dem Versorgungsspannungseingang und einem weiteren Eingang des integrierten Schaltkreises ein den Zeitpunkt der Schaltung des Lastschaltgliedes in den Bereich des Spannungs-Null-Durchgangs verlegender Kondensator und/oder Widerstand vorgesehen.

Es werden hierdurch eine größere Kontaktlebensdauer und eine verringerte Funkstörung im Stromnetz erzielt.

Nach weiterer Erfindung ist durch den integrierten Schaltkreis in Abhängigkeit vom durch das Potentiometer eingestellten Tastverhältnis eine automatische, zugeordnete Anheizperiode unter Berücksichtigung einer Restwärme des Heizelementes digital schaltbar.
Schließlich ist die Anheizperiode durch den integrierten Schaltkreis in Abhängigkeit der Einstellung des Potentiometers in Richtung geringerer Heizleistung ausschaltbar und in Richtung höherer Heizleistung wiedereinschaltbar.

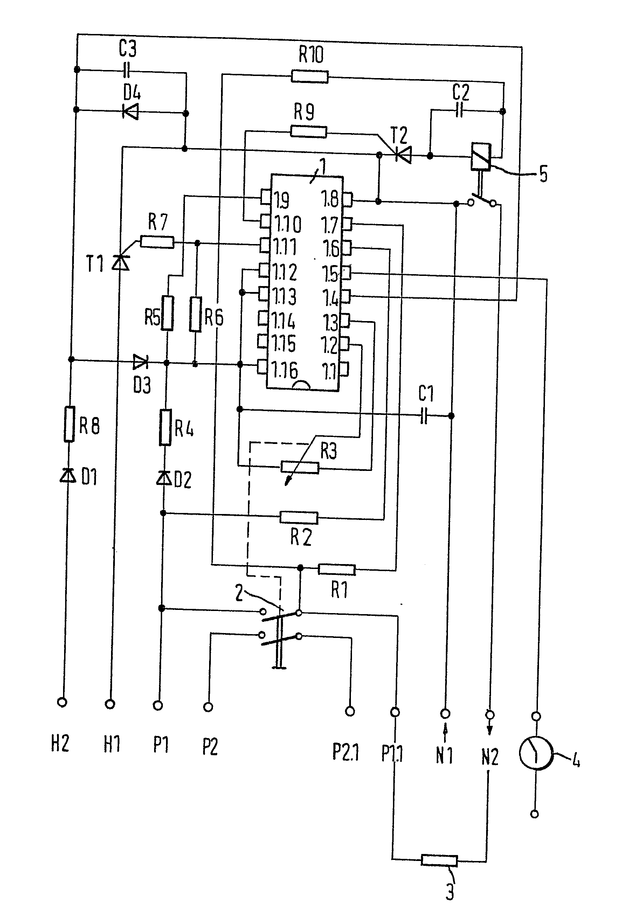

Der elektronische Energiesteller ist in der Zeichnung an einem Ausführungsbeispiel dargestellt.

Der integrierte Schaltkreis 1, der für die Leistungssteuerung eines elektrischen Heizelementes 3 lediglich mit 16 Außenanschlüssen 1.1 bis 1.16 versehen ist, bildet das Herzstück der Schaltung und erfüllt dabei mit seiner Peripherie-Beschaltung folgende Funktionen:

Die Diode D2 ist an der Phase des Netzes mit der Klemme P 1 angeschlossen und bildet in Verbindung mit dem Widerstand R 4 und dem Kondensator C 1 die Stromversorgung des integrierten Schaltkreises 1 aus einem 220 V-Wechselstromnetz.

Der Null-Leiter des Netzes liegt an der Klemme N 1. Über den Widerstand R 2 erhält der integrierte Schaltkreis 1 an einem Anschluß 1.6 eines Synchronisationseingangs die Netzfrequenz zur Synchronisation und Taktung der Zeitabläufe. Der integrierte Schaltkreis 1 ist somit ständig an Spannung gelegt, so daß er für seine Funktion der weiter unten beschriebenen, durch ihn möglichen Schaltvorgänge ständig in Bereitschaft ist. Über den Netzschalter 2, der die Klemme P 1.1 des Heizelementes mit der Phase P 1 des Netzes verbindet, und den Widerstand R 1 an Spannung legt, erkennt der integrierte Schaltkreis 1 den Betriebszustand EIN oder AUS. Die Einstellung der gewünschten Heizleistung geschieht über den Mittelabgriff eines Potentiometers R 3, das mit dem Netzschalter 2 drehungsschlüssig gekuppelt ist. Das Potentiometer R 3 ist an der Stromversorgung des integrierten Schaltkreises 1 an der Klemme 1.16 angeschlossen. Vom Ausgang 1.10 des integrierten Schaltkreises 1 wird über den Widerstand R 9 ein Thyristor T 2 angesteuert, der den Spulenstromkreis eines als Lastschaltglied wirksamen Relais 5 erregt. Die Erreger-Energie des Relais 5 wird über den Widerstand R 10 begrenzt, durch den Thyristor T 2 gleichgerichtet und durch den Kondensator C 2 geglättet. Durch den Relaiskontakt wird das Heizelement 3 mit seiner Klemme N 2 mit dem Null-Leiter des Netzes verbunden, über die Klemmen P 2 und P 2.1 des Netzschalters 2 kann noch ein Signalkreis geschaltet werden.

An dem integrierten Schaltkreis 1 ist über die Widerstände R 6 und R 7 sowie den Thyristor T 1 eine Heißanzeige angeschlossen, wodurch eine zwischen der Klemme H 1 und der Phase des Netzes liegende Signallampe gesteuert wird. Dabei dienen die Widerstände R 6 und R 7 als Ansteuerungswiderstände, und zwar R 6 im Fall des O-Zustandes und R 7 im Fall des L-Zustandes am Ausgang 1.11 des integrierten Schaltkreises 1.

Darüber hinaus besteht die Möglichkeit, weitere parallel geschaltete Schaltersysteme, die mechanische Schalter sein können und durch die weitere Kochstellen der Kocheinrichtung schaltbar sind, an die vorhandene Heißanzeige des elektronischen Energiestellers anzuschließen. Ein von diesen weiteren Schaltersystemen an der Anschlußklemme H 2 ankommendes 220 V-Signal wird über die Diode D 1 und den Widerstand R 8 dem Eingang 1.4 des integrierten Schaltkreises 1 zugeführt. Zu diesem Schaltzweig gehören noch die Spannungsbegrenzungsdiode D 3 und D 4 und der zur Glättung dienende Kondensator C 3. Die durch diesen Schaltzweig dem integrierten Schaltkreis 1 zugeführten Signale der weiteren Schaltersysteme werden ebenfalls über den integrierten Schaltkreis 1 auf den Thyristor T 1 geleitet zur Schaltung der an der Klemme H 1 angeschlossenen Signallampe. Es ist hierdurch eine gemeinsame Sicherheitsanzeige aller Kochstellen ermöglicht. Gleichzeitig wird durch dieses Heißsignal angezeigt, daß in einer Kochstelle noch Restwärme vorhanden ist, die weiter nutzbar gemacht werden kann.

Der integrierte Schaltkreis 1 kann an seinem Eingang 1.5 über eine Schaltuhr 4 gegen Null-Potential geschaltet sein, wodurch die Leistungssteller-Funktion blockiert wird. Hierdurch ist es möglich, vollautomatische, uhrzeitabhängige Kochvorgänge durchzuführen, die nach Einschaltung des Netzschalters 2 und Einstellung der Schaltuhr 4 zum gegebenen Zeitpunkt selbstätig ablaufen. Da die Schaltung des Laststromes hierbei ebenfalls von dem Lastschaltglied 5 der Schaltung übernommen wird, wird in der Schaltuhr 4 lediglich ein Schwachstrom- oder Halbleiterschalter benötigt. Zur zeitabhängigen Signalgabe reicht auch die Ausgangsleistung eines Digitaluhr-IC's aus.

Während das Potentiometer R 3 mit seinem einen Widerstandsende an dem Versorgungsspannungseingang 1.16 des integrierten Schaltkreises 1 liegt, ist sein anderes Widerstandsende mit einem anderen Eingang 1.3 des integrierten Schaltkreises 1 verbunden. Bei Störung des Ansteuerkreises der Schaltung, z.B. Unterbrechung, werden somit Signale dem integrierten Schaltkreis 1 zugeführt, wodurch der Thyristor T 1 in einen laufenden Ein- Auszustand versetzt wird, so daß die Signallampe der sogenannten Heißanzeige in einen Blinkbetrieb überführt wird. Es wird durch dieses Signal gleichzeitig die Ausgangsleistung der Schaltung unmittelbar auf das Minimum, z.B. 3 % heruntergeschaltet. Es werden hierdurch auftretende Störungen leicht erkennbar und nachteilige Auswirkungen auf die Kocheinrichtung vermieden.

Durch die Beschaltung des Eingangs 1.9 des integrierten Schaltkreises 1 über den Widerstand R 5 wird der Zeitpunkt des Schaltvorganges des Lastschaltgliedes 5 in den Bereich des Phasen-Null-Durchgangs verlegt.

Durch den integrierten Schaltkreis 1 wird in Abhängigkeit von dem Tastverhältnis, das durch das Potentiometer R 3 manuell einstellbar ist, eine automatische, dem jeweiligen eingestellten Tastverhältnis zugeordnete Anheizperiode digital schaltbar. Dabei erfolgt automatisch eine Berücksichtigung der in dem Heizelement 3 vorhandenen Restwärme, wenn dieses zuvor bereits für einen Kochvorgang eingeschaltet war. Der integrierte Schaltkreis 1 ist so ausgelegt, daß sein Ausgangssignal einen Zeittakt von 30 Sek. aufweist. Dies entspricht einem optimalen Zeitverhältnis zur Schaltung von mit Strahlungsheizkörpern beheizten Kochfeldern, z.B. Glaskeramikkochfelder. Es werden hierdurch bei Heizkörpern mit geringer Trägheit konstante Temperaturen in den jeweils eingestellten Leistungsstufen schaltbar und die Lebensdauer des die Leistung schaltenden Lastschaltgliedes 5 der für einen Kochherd vorgesehenen Lebensdauer angepaßt. Weiterhin ist der integrierte Schaltkreis so ausgelegt, daß in jeder Einschaltstellung des Energiestellers eine Mindest-Anheizperiode von 1 Min. eingehalten wird. Während dieser Zeit ist nur eine Änderung des Tastverhältnisses möglich. Erst nach Ablauf dieser Zeit wirkt sich diese veränderte Einstellung aus, indem sich dann die dem geänderten Tastverhältnis zugeordnete Anheizperiode und Fortkochleistung einstellt. Nach Ablauf der Mindest-Anheizperiode von 1 Min. kann die eingestellte Anheizperiode durch Verstellen des Potentiometers R 3 in Richtung geringere Heizleistung ausgeschaltet und in Richtung höherer Heizleistung wieder eingeschaltet werden. Dazu reicht jeweils eine Verstellung des Einstellgliedes um einen Skalenteil, z.B. bei einer 12er Teilung.

Der integrierte Schaltkreis 1 ist so ausgeführt, daß er eine Temperaturbeständigkeit bis max. 125 $^{\circ}$ aufweist. Weiterhin zeichnet er sich durch seine spezielle Auslegung für seine äußerst vielseitigen Steuervorgänge durch eine minimale Baugröße aus.

Patentansprüche

1. Elektronischer Energiesteller mit Anheizautomatik zur
Steuerung der Heizleistung eines elektrischen Heizelementes, z.B. einer Kocheinrichtung, der aus einer
ein Lastschaltglied schaltenden elektronischen Multivibratorschaltung besteht, deren Tastverhältnis manuell
durch ein mit einem Netzschalter gekuppelten Potentiometer einstellbar ist, dadurch gekennzeichnet, daß die
Multivibratorschaltung aus einem digitalen integrierten
Schaltkreis (1) besteht, der zu seiner Gleichstromversorgung über ein Netzteil (D2, R4, C1) ständig an
Spannung liegt, dem der Betriebszustand von dem Netzschalter (2) über einen Widerstand (R1) zuführbar ist
und der für die Synchronisation und Taktung der Schaltvorgänge mit einem Synchronisationseingang versehen ist,
dem die Netzfrequenz über einen Widerstand (R2) zuführbar
ist und daß ein Thyristor (T1) zur Schaltung einer Signallampe derart abhängig von der Einschaltung des Heizelementes (3) und/oder mindestens eines weiteren Heizelementes schaltbar ist, daß die Signallampe kurzfristig
nach Einschaltung aufleuchtet und langfristig nach Abschaltung erlischt.

2. Elektronischer Energiesteller nach Anspruch 1, dadurch
gekennzeichnet, daß dem Thyristor (T1) zur Ansteuerung
eine Widerstandskombination (R6, R7) zugeschaltet ist.

3. Elektronischer Energiesteller nach Anspruch 1 oder 2, dadurch gekennzeichnet, daß über einen externen Anschluss (H2) ein 220 V-Signal über ein weiteres Netzteil (D1, D3, D4, R8, C3) als Niedervolt-Gleichspannung dem integrierten Schaltkreis (1) zur Beeinflussung des Thyristors (T1) zuführbar ist.

4. Elektronischer Energiesteller nach einem oder mehreren der Ansprüche 1 bis 3, dadurch gekennzeichnet, daß der integrierte Schaltkreis (1) mit einem Eingang (1.5) über eine Uhr (4) mit Schwachstrom- oder Halbleiterschalter gegen Null-Potential schaltbar ist.

5. Elektronischer Energiesteller nach einem oder mehreren der Ansprüche 1 bis 4, dadurch gekennzeichnet, daß das Potentiometer (R3) mit seinem einen Widerstandsende an dem Versorgungsspannungseingang (1.16) des integrierten Schaltkreises (1) liegt und mit seinem anderen Widerstandsende mit einem anderen Eingang (1.3) des integrierten Schaltkreises (1) verbunden ist, wodurch bei Störung des Ansteuerkreises dem integrierten Schaltkreis (1) ein Signal zuführbar ist, das den Thyristor (T1) in einen laufenden Ein- Auszustand und das das Lastschaltglied (5) steuernde Tastverhältnis in das Minimum versetzt.

6. Elektronischer Energiesteller nach einem oder mehreren der Ansprüche 1 bis 5, dadurch gekennzeichnet, daß zwischen dem Versorgungsspannungseingang (1.16) und einem weiteren Eingang (1.9) des integrierten Schaltkreises (1) ein den Zeitpunkt der Schaltung des Lastschaltgliedes (5) in den Bereich des Spannungs-Null- Durchgangs verlegender Kondensator und/oder Widerstand (R5) vorgesehen ist.

7. Elektronischer Energiesteller nach einem oder mehreren der Ansprüche 1 bis 6, <u>dadurch gekennzeichnet</u>, daß durch den integrierten Schaltkreis (1) in Abhängigkeit vom durch das Potentiometer (R3) eingestellten Tastverhältnis eine automatische, zugeordnete Anheizperiode unter Berücksichtigung einer Restwärme des Heizelementes (3) digital schaltbar ist.

8. Elektronischer Energiesteller nach einem oder mehreren der Ansprüche 1 bis 7, dadurch gekennzeichnet, daß die Anheizperiode durch den integrierten Schaltkreis (1) in Abhängigkeit der Einstellung des Potentiometers (R3) in Richtung geringerer Heizleistung ausschaltbar und in Richtung höherer Heizleistung wiedereinschaltbar ist.

0057902